# FASCICULE DE BREVET EUROPEEN

(11) **EP 4 490 038 B1**
(45) Date de publication et mention de la délivrance du brevet: **19.11.2025**
(21) Numéro de dépôt: 23713713.8
(22) Date de dépôt: 08.03.2023
(51) Int. Cl.: B64D 11/06

(54) **SIÈGE ÉNERGÉTIQUEMENT AUTONOME**
ENERGIEAUTARKER SITZ
ENERGY-AUTONOMOUS SEAT

(30) Priorité: 08.03.2022 FR 2201998
(43) Date de publication de la demande: 15.01.2025
(73) Titulaire: Airbus Atlantic, 17300 Rochefort (FR)
(72) Inventeur: DUCHESNE, Julien, 17450 SAINT LAURENT DE LA PRÉE (FR)
(74) Mandataire: Santarelli
(86) Numéro de dépôt international: PCT/FR2023/050311
(87) Numéro de publication internationale: WO 2023/170365

(56) Documents cités:
- EP-A1- 2 546 145
- EP-A1- 3 050 800
- DE-A1- 102006 020 146
- DE-A1- 102011 122 188

## Description

### Domaine technique de l'invention

La présente invention concerne un siège utilisé pour l'aménagement de véhicules de transport tels qu'un aéronef.

### Etat de la technique

Les véhicules de transport, tels que les aéronefs, sont munis de sièges permettant à des passagers de s'assoir.

Ces sièges sont généralement connectés électriquement de sorte à offrir aux passagers certains services ou conforts tels que : différentes positions du siège pouvant aller jusqu'à une position complètement allongée (lit), éclairages, ports de recharge, téléviseur, etc. L'électricité est classiquement fournie par des câbles tirés sous un plancher sur lequel est installé le siège et depuis un générateur jusqu'aux sièges.

De tels câbles ne permettent pas une autonomie énergétique du siège et apportent un supplément de masse au véhicule. Or cela va à l'encontre des objectifs que se fixent désormais les constructeurs, notamment celui de réduire le poids du véhicule autant que possible, surtout dans le domaine aéronautique. Dans ce contexte, on connait le document US 2008/149770 A1 qui propose un siège comportant une pile à combustible configurée pour alimenter en électricité des dispositifs et actionneurs.

EP2546145A1 décrit un siège comportant une assise et un dossier mutuellement articulés.

### Exposé de l'invention

La présente invention vise à fournir un siège autonome énergétiquement, ne requérant pas l'intervention humaine pour son alimentation électrique.

Elle propose à cet effet un siège comportant une assise et un dossier mutuellement articulés, le siège comportant également au moins un actionneur électrique configuré pour rendre mobile l'assise et/ou le dossier.

Selon l'invention, le siège comprend un dispositif de récupération d'énergie configuré pour récupérer de l'énergie cinétique produite par le siège et transformer ladite énergie cinétique en énergie électrique, et comporte en outre :
- un dispositif de production d'énergie configuré pour produire de l'énergie électrique à partir d'une source d'énergie ambiante ; et
- un dispositif de stockage connecté au dispositif de production d'énergie et audit au moins un actionneur, et configuré pour stocker l'énergie électrique provenant du dispositif de production d'énergie et dudit au moins un actionneur.

Le siège comporte un système de freinage configuré pour freiner le dossier et/ou l'assise dans son mouvement, le dispositif de récupération étant configuré pour récupérer l'énergie cinétique produite lors du freinage par le système de freinage. Le siège ainsi proposé est autonome en énergie électrique. En effet, grâce à l'énergie électrique générée par le dispositif de production et l'actionneur, tout accessoire ou composant électronique dont peut être pourvu le siège est alimenté en électricité.

En outre, le siège est énergétiquement autosuffisant, c'est-à-dire que l'intervention humaine n'est pas nécessaire pour que le dispositif de production et l'actionneur génèrent de l'électricité ni pour permettre son alimentation électrique.

Des caractéristiques préférées particulièrement commodes du siège selon l'invention sont présentées ci-dessous.

Le dossier est mobile entre une position relevée et une position allongée au moyen dudit au moins un actionneur, le dossier formant avec l'assise un premier angle sensiblement plat dans la position allongée, et un deuxième angle dans la position relevée, le deuxième angle étant plus petit que le premier angle, le système de freinage étant configuré pour freiner le dossier dans son mouvement de la position relevée vers la position allongée.

Selon un mode de réalisation, l'actionneur est réversible et comprend le dispositif de récupération d'énergie.

Le dispositif de production d'énergie comprend des cellules photovoltaïques, la source d'énergie ambiante étant une lumière naturelle et/ou artificielle.

Le dispositif de production d'énergie comprend au moins un récepteur infrarouge, la source d'énergie ambiante étant un rayonnement infrarouge.

Ledit au moins un récepteur infrarouge est dirigé vers le dossier et/ou l'assise.

Le siège comporte en outre un dispositif de commande configuré pour commander le dispositif de stockage afin de distribuer l'énergie électrique stockée à des composants électroniques du siège.

Plus particulièrement, le dispositif de stockage peut être une batterie ou un condensateur.

### Brève description des figures

D'autres particularités et avantages de l'invention apparaîtront encore dans la description ci-après en référence aux dessins annexés, donnés à titre d'exemples non limitatifs :
- la figure 1 est une vue schématique d'un siège selon un mode de réalisation conforme à l'invention ; et
- la figure 2 est un diagramme d'un système de gestion électrique du siège.

### Description détaillée

Dans le mode de réalisation décrit ci-après, on fait référence à un siège pour passager d'avion. Ce mode de réalisation non limitatif est donné pour une meilleure compréhension de l'invention et n'exclut pas l'utilisation du siège dans un autre véhicule.

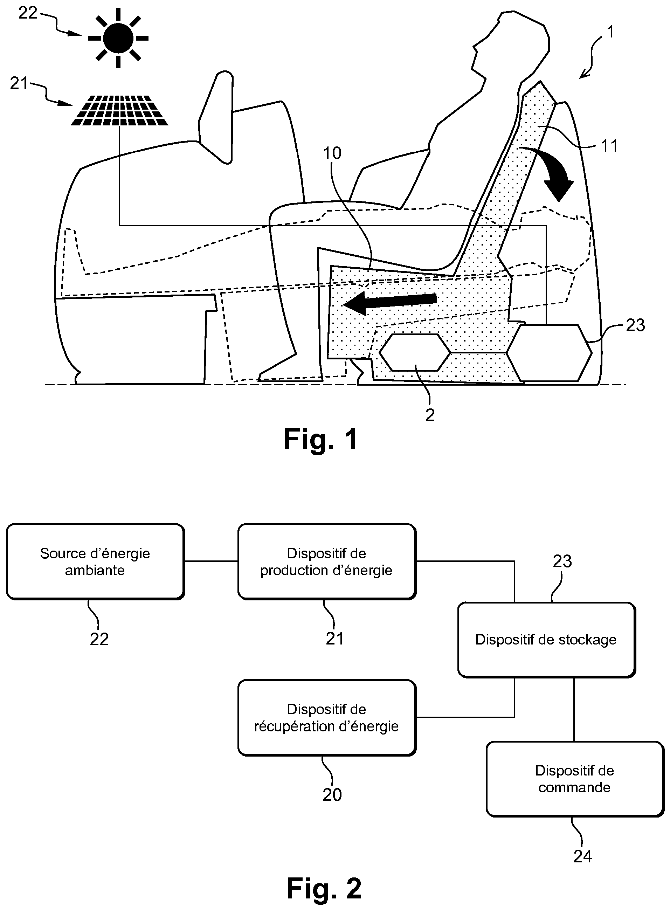

La figure 1 représente, de manière schématique, un siège 1 selon un mode de réalisation de l'invention, sur lequel un passager est installé.

Le siège 1 comporte une assise 10, celle-ci désignant la partie du siège sur laquelle un passager peut s'asseoir en position normale.

Le siège 1 comporte également un dossier 11, celui-ci désignant la partie du siège sur laquelle le passager peut appuyer son dos.

Dans la présente description, on désigne par plan horizontal un plan sensiblement parallèle à l'assise 10 lorsque le siège 1 est installé et prêt pour l'utilisation. Un plan horizontal est également sensiblement parallèle à un plancher sur lequel est installé le siège 1. Une direction horizontale est une direction appartenant à un plan horizontal.

L'assise 10 et le dossier 11 sont mutuellement articulés. Le dossier 11 est mobile en rotation par rapport à l'assise 10 autour d'un axe de charnière. L'axe de charnière s'étend horizontalement. Une telle articulation est connue et n'est donc pas représentée sur la figure 1.

Le dossier 11 est mobile entre une position dite relevée et une position dite allongée.

Dans la position allongée, le dossier 11 forme avec l'assise 10 un angle, appelé premier angle, sensiblement plat. La position allongée du dossier 11 permet au passager d'être couché sur le siège.

Dans la position relevée, le dossier 11 forme avec l'assise 10 un angle, appelée deuxième angle, plus petit que le premier angle. Le deuxième angle est notamment proche de l'angle droit. La position relevée du dossier 11 permet au passager d'être assis dans une position conventionnelle correspondant à celle utilisée usuellement dans les avions de ligne en phase de décollage ou atterrissage pour des raisons de sécurité. Le deuxième angle est généralement compris entre 90° et 100°.

L'assise 10 est mobile selon un mouvement de translation rectiligne, dans un plan horizontal, entre une position avancée et une position reculée.

Le siège 1 comporte également une embase, non représentée, qui sert de support à l'assise 10. En effet, l'embase permet la liaison au plancher sur lequel est installé le siège 1. L'embase est généralement montée sur des moyens de guidage et de coulissements (également non représentés) assemblés au plancher et permettant le mouvement de translation de l'assise 10 entre la position avancée et la position reculée.

Le siège 1 peut prendre une configuration de repos et une configuration de couchage. Dans la configuration de repos, l'assise 10 est dans la position reculée et le dossier 11 dans la position relevée. Dans la configuration de couchage, l'assise 10 est dans la position avancée et le dossier 11 dans la position allongée. Le siège 1 comporte au moins un actionneur 2 configuré pour rendre mobile l'assise 10 et/ou le dossier 11.

L'actionneur 2 est notamment un actionneur électrique tel qu'un moteur électrique.

Par exemple, le siège 1 peut comporter un premier actionneur configuré pour déplacer l'assise 10 et un deuxième actionneur configuré pour déplacer le dossier 11. En particulier, le premier actionneur est configuré pour déplacer l'assise 10 entre la position avancée et la position reculée. Le deuxième actionneur est configuré pour déplacer le dossier 11 entre la position relevée et la position allongée.

Dans un autre exemple de réalisation, le siège 1 peut comporter un unique actionneur configuré pour à la fois déplacer l'assise 10 et le dossier 11. L'unique actionneur est configuré pour déplacer l'assise 10 entre la position avancée et la position reculée, et pour déplacer le dossier 11 entre la position relevée et la position allongée.

Les deux mouvements décrits ci-dessus peuvent bien entendu être synchronisés ou réalisés indépendamment l'un de l'autre.

Le siège 1 comporte un système de freinage, non représenté, configuré pour freiner le dossier 11 et/ou l'assise 10 dans son mouvement. Par exemple, le système de freinage est configuré pour freiner le dossier 11 dans son mouvement de la position relevée vers la position allongée.

La figure 2 représente un diagramme d'un système de gestion d'énergie électrique selon un exemple de réalisation de l'invention.

L'actionneur 2 comprend un dispositif de récupération d'énergie 20.

Le dispositif de récupération d'énergie 20 est configuré pour récupérer de l'énergie cinétique produite par le siège et transformer ladite énergie cinétique en énergie électrique.

Le dispositif de récupération d'énergie 20 peut récupérer de l'énergie cinétique produite lorsque le dossier 11 passe d'une position à l'autre, par exemple de la position relevée à la position allongée.

En particulier, le dispositif de récupération d'énergie 20 récupère l'énergie cinétique produite lors du freinage par le système de freinage. Le dispositif de récupération d'énergie 20 récupère par exemple l'énergie cinétique produite par le système de freinage lors du mouvement du dossier 11 de la position relevée vers la position allongée.

L'actionneur 2 est réversible. La réversibilité de l'actionneur 2 est utilisée pour récupérer l'énergie cinétique. L'actionneur 2 est par exemple un actionneur rotatif.

Dans un autre exemple de réalisation l'actionneur 2 peut être un actionneur linéaire non réversible. L'actionneur linéaire peut être alors associé à un système débrayable de sorte à permettre la récupération de l'énergie cinétique.

Le siège 1 comporte un dispositif de production d'énergie 21, configuré pour produire de l'énergie électrique à partir d'une source d'énergie ambiante 22.

En particulier, le dispositif de production d'énergie 21 peut être configuré pour produire de l'énergie électrique à partir d'une source lumineuse ambiante.

Par exemple, le dispositif de production d'énergie 21 peut comprendre des cellules photovoltaïques. La source d'énergie ambiante 22 est alors la lumière naturelle. Autrement dit, les cellules photovoltaïques génèrent de l'énergie électrique à partir de la lumière naturelle. Dans l'aéronef, la lumière naturelle arrive notamment des hublots pendant les vols de jour.

Le dispositif de production d'énergie 21 peut comprendre, en alternative de ou en combinaison avec les cellules photovoltaïques, au moins un récepteur infrarouge. La source d'énergie ambiante 22 est alors un rayonnement infrarouge.

Le rayonnement infrarouge peut provenir notamment du corps du passager. Le récepteur infrarouge est dirigé vers le dossier 11 et/ou l'assise 10 afin de capter le rayonnement infrarouge humain.

En pratique, dans l'aéronef, une ou plusieurs lampes généralement installées à un plafonnier, peuvent être remplacées par un ou plusieurs récepteurs infrarouges.

Le dispositif de production d'énergie 21 peut, en alternative de ou en combinaison des solutions précédentes, être configuré pour produire de l'énergie électrique à partir du bruit ambiant. Le dispositif de production d'énergie 21 produit de l'énergie électrique notamment à partir de vibrations vocales, musicales ou émises par d'autres bruits ambiants.

Le siège 1 comporte également un dispositif de stockage 23, connecté au dispositif de production et à l'actionneur 2.

Le dispositif de stockage 23 est configuré pour stocker l'énergie électrique provenant du dispositif de production et de l'actionneur 2.

Le dispositif de stockage 23 peut être par exemple une batterie, ou un condensateur, voire un supercondensateur.

Le siège 1 comporte également un dispositif de commande 24.

Le dispositif de commande 24 est configuré pour commander le dispositif de stockage 23 afin de distribuer l'énergie électrique stockée à des composants électroniques du siège 1.

Le dispositif de commande 24 distribue l'énergie électrique aux composants électroniques tels que des éclairages, des ports de recharge ou un téléviseur. Le dispositif de commande 24 distribue l'énergie électrique également à l'actionneur ou aux actionneurs 2 de sorte à permettre le mouvement du dossier 11 et/ou de l'assise 10.

Le siège 1 peut comprendre également un dispositif de gestion charge-décharge. Le dispositif de gestion charge-décharge gère le besoin en énergie électrique des différents composants électroniques ainsi que de celui du dispositif de stockage 23.

La présente invention propose un siège énergétiquement autonome et autosuffisant grâce à l'utilisation combinée de la transformation de l'énergie cinétique en énergie électrique, et de la production d'énergie électrique à partir d'une source d'énergie ambiante. L'objectif de l'invention est de fournir une autonomie énergétique suffisante.

## Revendications

1. Siège comportant une assise (10) et un dossier (11) mutuellement articulés, le siège (1) comportant également au moins un actionneur (2) électrique configuré pour rendre mobile l'assise (10) et/ou le dossier (11), le siège comprenant un dispositif de récupération d'énergie (20) configuré pour récupérer de l'énergie cinétique produite par le siège (1) et transformer ladite énergie cinétique en énergie électrique, et comportant en outre :
- un dispositif de production d'énergie (21) configuré pour produire de l'énergie électrique à partir d'une source d'énergie ambiante (22) ; et
- un dispositif de stockage (23) connecté au dispositif de production d'énergie (21) et audit au moins un actionneur (2), et configuré pour stocker l'énergie électrique provenant du dispositif de production d'énergie (21) et dudit au moins un actionneur (2) ;
le siège étant **caractérisé en ce qu'**il comprend un système de freinage configuré pour freiner l'assise (10) et/ou le dossier (11) dans son mouvement, le dispositif de récupération d'énergie (20) étant configuré pour récupérer l'énergie cinétique produite lors du freinage par le système de freinage.

2. Siège selon la revendication 1, dans lequel le dossier (11) est mobile entre une position relevée et une position allongée au moyen dudit au moins un actionneur (2), le dossier (11) formant avec l'assise (10) un premier angle sensiblement plat dans la position allongée, et un deuxième angle dans la position relevée, le deuxième angle étant plus petit que le premier angle, le système de freinage étant configuré pour freiner le dossier (11) dans son mouvement de la position relevée vers la position allongée.

3. Siège selon l'une des revendications 1 à 2, dans lequel l'actionneur (2) est réversible et comprend le dispositif de récupération d'énergie (20).

4. Siège selon l'une des revendications 1 à 3, dans lequel le dispositif de production d'énergie (21) comprend des cellules photovoltaïques, la source d'énergie ambiante (22) étant une lumière naturelle et/ou artificielle.

5. Siège selon l'une des revendications 1 à 4, dans lequel le dispositif de production d'énergie (21) comprend au moins un récepteur infrarouge, la source d'énergie ambiante (22) étant un rayonnement infrarouge.

6. Siège selon la revendication 5, dans lequel ledit au moins un récepteur infrarouge est dirigé vers l'assise (10) et/ou le dossier (11).

7. Siège selon l'une des revendications 1 à 6, comportant en outre un dispositif de commande (24) configuré pour commander le dispositif de stockage (23) afin de distribuer l'énergie électrique stockée à des composants électroniques du siège (1).

8. Siège selon l'une des revendications 1 à 7, dans lequel le dispositif de stockage (23) est une batterie.

9. Siège selon l'une des revendications 1 à 7, dans lequel le dispositif de stockage (23) est un condensateur.

## Patentansprüche

1. Sitz, der eine Sitzfläche (10) und eine Rückenlehne (11) aufweist, die gegenseitig gelenkig sind, wobei der Sitz (1) auch mindestens einen elektrischen Aktuator (2) aufweist, der so eingerichtet ist, um die Sitzfläche (10) und/oder die Rückenlehne (11) beweglich zu machen, wobei der Sitz eine Energierückgewinnungsvorrichtung (20) umfasst, die so eingerichtet ist, um kinetische Energie zurückzugewinnen, die von dem Sitz (1) erzeugt wird, und die kinetische Energie in elektrische Energie umzuwandeln, und ferner Folgendes aufweist:
- eine Energieerzeugungsvorrichtung (21), die so eingerichtet ist, um elektrische Energie ausgehend von einer Umgebungsenergiequelle (22) zu erzeugen; und
- eine Speichervorrichtung (23), die mit der Energieerzeugungsvorrichtung (21) verbunden ist und mindestens einen Aktuator (2) prüft, und so eingerichtet ist, um die elektrische Energie zu speichern, die von der Energieerzeugungsvorrichtung (21) und dem mindestens einen Aktuator (2) stammt;
wobei der Sitz **dadurch gekennzeichnet ist, dass** er ein Bremssystem umfasst, das so eingerichtet ist, um die Sitzfläche (10) und/oder die Rückenlehne (11) in ihrer Bewegung zu bremsen, wobei die Energierückgewinnungsvorrichtung (20) so eingerichtet ist, um die kinetische Energie, die bei dem Bremsen durch das Bremssystem erzeugt wird, zurückzugewinnen.

2. Sitz nach Anspruch 1, wobei die Rückenlehne (11) mithilfe des mindestens einen Aktuators (2) zwischen einer Hochstellung und einer Liegestellung beweglich ist, wobei die Rückenlehne (11) mit der Sitzfläche (10) einen ersten im Wesentlichen flachen Winkel in der Liegestellung und einen zweiten Winkel in der Hochstellung bildet, wobei der zweite Winkel kleiner als der erste Winkel ist, wobei das Bremssystem so eingerichtet ist, um die Rückenlehne (11) in ihrer Bewegung von der Hochstellung in die Liegestellung zu bremsen.

3. Sitz nach einem der Ansprüche 1 bis 2, wobei der Aktuator (2) umkehrbar ist und die Energierückgewinnungsvorrichtung (20) umfasst.

4. Sitz nach einem der Ansprüche 1 bis 3, wobei die Energieerzeugungsvorrichtung (21) Photovoltaikzellen umfasst, wobei die Umgebungsenergiequelle (22) natürliches und/oder künstliches Licht ist.

5. Sitz nach einem der Ansprüche 1 bis 4, wobei die Energieerzeugungsvorrichtung (21) mindestens einen Infrarotempfänger umfasst, wobei die Umgebungsenergiequelle (22) Infrarotstrahlung ist.

6. Sitz nach Anspruch 5, wobei der mindestens eine Infrarotempfänger auf die Sitzfläche (10) und/oder die Rückenlehne (11) ausgerichtet ist.

7. Sitz nach einem der Ansprüche 1 bis 6, ferner eine Steuervorrichtung (24) enthaltend, die konfiguriert ist, um die Speichervorrichtung (23) zu steuern, um die gespeicherte elektrische Energie an elektronische Komponenten des Sitzes (1) zu verteilen.

8. Sitz nach einem der Ansprüche 1 bis 7, wobei die Speichervorrichtung (23) eine Batterie ist.

9. Sitz nach einem der Ansprüche 1 bis 7, wobei die Speichervorrichtung (23) ein Kondensator ist.

## Claims

1. A seat including a sitting portion (10) and a backrest (11) articulated to one another, the seat (1) also including at least one electric actuator (2) configured to make the sitting portion (10) and/or the backrest (11) movable, the seat comprising an energy recovery device (20) configured to recover kinetic energy produced by the seat (1) and to transform said kinetic energy into electrical energy, and further including:
- an energy production device (21) configured to produce electrical power from an ambient energy source (22); and
- a storage device (23) connected to the energy production device (21) and to said at least one actuator (2), and configured to store the electrical energy originating from the energy production device (21) and from said at least one actuator (2);
the seat being **characterized in that** it comprises a braking system configured to brake the sitting portion (10) and/or the backrest (11) in its movement, the energy recovery device (20) being configured to recover the kinetic energy produced during braking by the braking system.

2. The seat according to claim 1, wherein the backrest (11) is movable between a raised position and a lying position by means of said at least one actuator (2), the backrest (11) forming with the sitting portion (10) a substantially flat first angle in the lying position, and a second angle in the raised position, the second angle being smaller than the first angle, the braking system being configured to brake the backrest (11) in its movement from the raised position towards the lying position.

3. The seat according to claims 1-2, wherein the actuator (2) is reversible and comprises the energy recovery device (20).

4. The seat according to claims 1-3, wherein the energy production device (21) comprises photovoltaic cells, the ambient energy source (22) being a natural and/or artificial light.

5. The seat according to claims 1-4, wherein the energy production device (21) comprises at least one infrared receiver, the ambient power source (22) being an infrared radiation.

6. The seat according to claim 5, wherein said at least one infrared receiver is directed towards the sitting portion (10) and/or the backrest (11).

7. The seat according to claims 1-6, further including a control device (24) configured to control the storage device (23) in order to distribute the stored electrical energy to electronic components of the seat (1).

8. The seat according to claims 1-7, wherein the storage device (23) is a battery.

9. The seat according to claims 1-7, wherein the storage device (23) is a capacitor.
